(19) Europäisches Patentamt
European Patent Office
Office européen des brevets

(11) **EP 2 373 594 B1**

(12) **EUROPÄISCHE PATENTSCHRIFT**

(45) Veröffentlichungstag und Bekanntmachung des Hinweises auf die Patenterteilung:
**08.09.2021 Patentblatt 2021/36**

(51) Int Cl.:
***C04B 35/195*** *(2006.01)*     ***C04B 35/565*** *(2006.01)*
***C04B 38/06*** *(2006.01)*

(21) Anmeldenummer: **09796350.8**

(22) Anmeldetag: **04.12.2009**

(86) Internationale Anmeldenummer:
**PCT/EP2009/066450**

(87) Internationale Veröffentlichungsnummer:
**WO 2010/066648 (17.06.2010 Gazette 2010/24)**

(54) **OFFENZELLIGE KERAMIK- UND/ODER METALLSCHÄUME MIT RAUER UMHÜLLENDER OBERFLÄCHE UND EIN VERFAHREN ZU IHRER HERSTELLUNG**

OPEN-CELL CERAMIC AND/OR METAL FOAMS HAVING A ROUGH ENVELOPING SURFACE AND A METHOD FOR THE PRODUCTION THEREOF

MOUSSES CÉRAMIQUES ET/OU MÉTALLIQUES À ALVÉOLES OUVERTS, À SURFACE ENVELOPPANTE RUGUEUSE, ET LEUR PROCÉDÉ DE PRODUCTION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **12.12.2008 DE 102008054596**

(43) Veröffentlichungstag der Anmeldung:
**12.10.2011 Patentblatt 2011/41**

(73) Patentinhaber: **Fraunhofer-Gesellschaft zur Förderung der angewandten Forschung e.V.
80686 München (DE)**

(72) Erfinder:
• **STANDKE, Gisela**
**01099 Dresden (DE)**
• **ADLER, Jörg**
**01662 Meißen (DE)**
• **BÖTTGE, Daniela**
**01309 Dresden (DE)**

(74) Vertreter: **Rauschenbach, Marion
PF 27 01 75,
Bienertstrasse 15
01172 Dresden (DE)**

(56) Entgegenhaltungen:
EP-A2- 0 686 847    DE-A1- 3 540 449
US-B1- 6 635 339    US-B1- 6 887 809

**Beschreibung**

Die Erfindung bezieht sich auf das Gebiet der Werkstoffwissenschaften und betrifft offenzellige Keramik- und/oder Metallschäume mit rauer umhüllender Oberfläche, wie sie beispielsweise für Verbundwerkstoffe oder mit funktionalisierter Beschichtung versehen als Katalysatorträger, eingesetzt werden können, und ein Verfahren zu ihrer Herstellung.

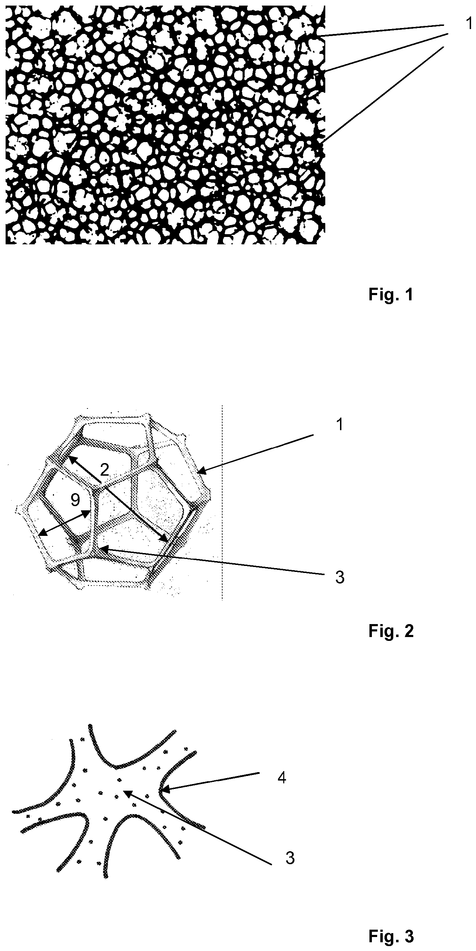

Seit langem bekannt ist das "Schwartzwalder-Verfahren" (US 3,090,094 B1), nach dem ein Polyurethan geschäumt und retikuliert wird, der offenzellige Schaum mit einer Keramik- oder Metallpartikelsuspension beschichtet und nachfolgend das Polyurethan ausgebrannt und die Keramik- oder Metallpartikel versintert werden. Der so entstandene Schaum ist ein Gerüst aus einer Vielzahl von Stegen (Fig. 1), die die Zellen des Schaumes (Fig. 2) voneinander abgrenzen.

Eine idealisierte Schaumzelle wird durch ihren Durchmesser charakterisiert (Zelldurchmesser), der dem Durchmesser einer annähernd von ihr eingeschlossenen Kugel entspricht. Außerdem bildet eine Schaumzelle sogenannte Fensteröffnungen (Zellfenster) zu den benachbarten Zellen, die in etwa einen Kreis umschließen, dessen Durchmesser in etwa ein Drittel des mittleren Durchmessers der Schaumzelle beträgt.

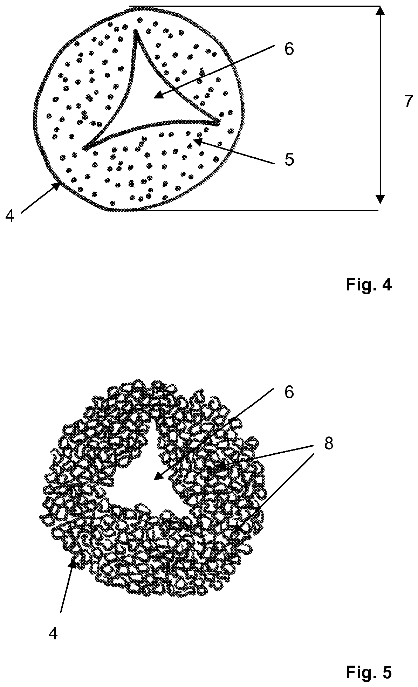

Weiterhin weisen die Stege Risse, Hohlräume und Porosität auf (Fig. 4), wobei die Poren im Stegmaterial nicht mit den Zellen des Schaumes übereinstimmen und verwechselt werden dürfen.

Die umhüllende Oberfläche der Stege bildet in ihrer Gesamtheit die geometrische äußere, für Rauheitsmessungen direkt zugängliche, Oberfläche des Schaumes (s. Fig. 3 und 4). Im Rahmen dieser Erfindung soll dies nachfolgend unter der **umhüllenden Oberfläche** verstanden werden. Diese Oberfläche kann während der Anwendung des Schaumes auch in Wechselwirkung mit einem durchströmenden Medium (einem Gas, einer Flüssigkeit) oder einem weiteren Feststoff treten, z.B. indem eine Beschichtung aufgebracht wird, oder wenn die offenen Zellen des Schaumes mit einer festen Matrix gefüllt sind, wie im Fall der sogenannten Metal-Matrix-Composites (MMC). Dabei kommt den Oberflächeneigenschaften der Stege eine besondere Bedeutung zu. Eine Bestimmung der umhüllenden Oberfläche kann z.B. durch Bildauswertung von keramographischen oder metallographischen Anschliffen erfolgen und wird auf das äußere Volumen der Probe oder deren Gewicht bezogen. Unter äußerem Volumen wird dabei das aus den äußeren Abmaßen der Schaumprobe berechnete Volumen verstanden.

Die üblicherweise über die Gasadsorption bestimmte und auf das Gewicht (oder auch auf das Volumen) einer Probe bezogene, sogenannte **spezifische Oberfläche** ist dagegen die Summe aller durch das Messgas belegbaren Oberfläche des Schaumes, d.h. umfasst sowohl die o.g. umhüllende Oberfläche und die Oberfläche der zugänglichen Risse, Poren und Hohlräume in den Stegen, d.h. die spezifische Oberfläche ist immer höher als die umhüllende Oberfläche. Die Bestimmung der spezifischen Oberfläche wird ebenfalls nach bekannten Verfahren durchgeführt, die auch in der DIN ISO 9277 (3003-05) beschrieben sind.

Weiterhin sind Schaumkeramiken und Metallschäume, sowie deren Herstellungsverfahren bekannt, die auch Verfahren beinhalten, die die Festigkeit der Schaumkeramiken zu verbessern (US 6,635,339 B1; US 6,887,809).

Ebenfalls ist aus der DE 35 40 449 A1 ein Keramikschaum und ein Verfahren zu seiner Herstellung bekannt. Der Keramikschaum besteht aus einer dreidimensional vernetzten Keramikstruktur, aus vielen miteinander verbundenen Keramikstegen, wobei die Dichte des Schaumes zwischen 0,4 und 2,0 $g/cm^3$ liegt und die Stege mehrere Keramikschichten aufweisen. Hergestellt wird dieser Keramikschaum, indem eine Keramikpartikelsuspension hergestellt wird, der Ausgangsschaum damit mehrmals imprägniert wird, nach jedem Imprägnieren getrocknet wird und danach der Ausgangsschaum ausgebrannt und die Keramikpartikel versintert werden.

Die Rauheit der Oberfläche keramischer Bauteile korreliert mit der bei ihrer Herstellung eingesetzten Pulver-Partikelgröße. Wird ein vergleichsweise feines Pulver eingesetzt (z.B. bei dicht gesintertem Siliciumcarbid Pulver mit einem mittleren Korndurchmesser von 0,5 μm), so wird ein nahezu dichter (99%) Sinterkörper hergestellt, welcher eine vergleichsweise glatte Oberfläche besitzt. Ein dicht gesintertes Aluminiumoxid besitzt beispielsweise einen Mittenrauwert $R_a$ von 0,7 μm, welcher in etwa der Partikelgröße des Ausgangspulvers entspricht. Werden vergleichsweise grobe Pulver eingesetzt, welche eine Aufrauung der Oberfläche bewirken können, so findet keine ausreichende Versinterung mehr statt. Die verbleibenden Poren wirken als bruchauslösende Defekte, verursachen damit eine geringe Festigkeit bis zur Nichtverwendbarkeit.

Bauteile in Form von Schaumkeramiken oder Metallschäumen besitzen Stege, die mit den Oberflächengüten von anderen keramischen Formgebungsverfahren vergleichbar sind.

Bezüglich der Charakterisierung der Oberflächenrauheit von keramischen Materialien sind dazu verschiedene DIN bekannt (DIN 4760 Gestaltabweichungen; DIN 4768 (1990) Ermittlung der Rauheitsgrößen $R_a$, $R_z$, Rmax mit elektrischen Tastschnittgräten, Begriffe und Messbedingungen; DIN EN ISO 4287 (1998) Oberflächenbeschaffenheit, Tastschnittverfahren, Benennungen, Definitionen und Kenngrößen der Oberflächenbeschaffenheit), die sowohl die Begriffe als auch die Messverfahren beschreiben.

Die Oberflächen von keramischen Werkstoffen weisen in den meisten Fällen keine regelmäßige Struktur auf, sondern enthalten Gestaltabweichungen, die unterteilt sind in Rauheit, Welligkeit und Formgestalt. Wichtige Kenngrößen für keramische Bauteile sind $R_a$ = Mittenrauwert und $R_z$ = Rautiefe.

Der Mittenrauwert $R_a$ ist ein rechnerischer Mittelwert aller Abweichungen des Rauheitsprofiles von der mittleren Linie der definierten Bezugsstrecke. $R_a$ entspricht theoretisch dem Abstand mehrerer Linien, die sich bilden, wenn die Berge oberhalb der Mittellinie und die Täler unterhalb der Mittellinie in gleich große Rechtecke verwandelt werden würden.

$$R_a = \frac{1}{l_m} \int_0^{l_m} |y| \, dx \qquad R_q = \sqrt{\frac{1}{l_m} \int_0^{l_m} y^2 \, dx}$$

Die Rautiefe $R_z$ ist der Mittelwert aus Einzelrautiefen von fünf aufeinander folgenden Einzelmessstrecken im Rauheitsprofil. Die Extremwerte in jedem Messabschnitt werden addiert und die Spannweite durch die Anzahl der Messabschnitte dividiert.

$$R_z = \frac{1}{5} \left( R_{z1} + R_{z2} + R_{z3} + R_{z4} + R_{z5} \right)$$

Bei keramischen Bauteilen entstehen vergleichsweise glatte Oberflächen, welche durch mechanische Bearbeitungsverfahren (Schleifen, Polieren, Honen) noch weiter geglättet werden

Typische Rauheiten von keramischen Bauteilen sind aus Brevier Technische Keramik, Kap. 10.5.4.4, 4. Auflage 2006, Verlag Hans Carl, Nürnberg, Hrsg: Informationszentrum Technische Keramik im Verband der Keramischen Industrie e.V. bekannt:

| Material | Mittenrauwert $R_a$ in $\mu$m | Rautiefe $R_z$ in $\mu$m |
|---|---|---|
| Aluminiumoxid; 96%; Oberfläche nach dem Sintern | 0,7 | 4,8 |
| Aluminiumoxid; 96%; Oberfläche geschliffen | 0,3 | 3,7 |

Nachteile des Standes der Technik bestehen insbesondere darin, dass die umhüllende Oberfläche der Stege von Keramik- und/oder Metallschäumen vergleichsweise glatt ist und die Haftung von weiteren funktionalen Beschichtungen oder von Füllungen mit Festkörpern auf diesen Oberflächen nicht ausreichend ist.

Die Aufgabe der vorliegenden Erfindung besteht in der Angabe von Keramik- und/oder Metallschäumen mit rauer umhüllender Oberfläche, durch die eine verbesserte Haftung zu Beschichtungen der Oberfläche erreicht wird, und in der Angabe eines Verfahrens zur Herstellung derartiger Keramik- und/oder Metallschäume, welches in einfacher Art und Weise realisierbar ist.

Die Aufgabe wird durch die in den Ansprüchen angegebene Erfindung gelöst. Vorteilhafte Ausgestaltungen sind Gegenstand der Unteransprüche.

Bei den erfindungsgemäßen offenzelligen Keramik- und/oder Metallschäumen mit rauer umhüllender Oberfläche bestehen die umhüllenden Oberflächen der Stege von Keramik- und/oder Metallschäumen aus einem Material und/oder sind mindestens teilweise mit einer Schicht bedeckt, welche(s) eine raue Oberfläche mit einem Mittenrauwert $R_a$ im Bereich von 3 - 15 $\mu$m und/oder eine Rautiefe $R_z$ im Bereich von 20-100 $\mu$m, gemessen nach DIN EN ISO 4287 (1998), aufweist.

Vorteilhafterweise ist die spezifische Oberfläche dieser Keramik- und/oder Metallschaum-Oberflächen um maximal 10 % gegenüber bekannten Schaum-Oberflächen mit gleicher Zellgröße verändert.

Weiterhin vorteilhafterweise ist die spezifische Oberfläche um maximal 3 - 5 % verändert.

Und auch vorteilhafterweise weist die Schicht eine Dicke von 20 bis 500 $\mu$m auf.

Vorteilhaft ist es auch, wenn die raue Oberfläche der Schäume und/oder der Schicht porös ist.

Ebenso vorteilhaft ist es, wenn die raue Oberfläche der Schäume und/oder der Schicht einen Porenanteil von 60 - 85 % aufweist.

Weiterhin vorteilhaft ist es, wenn die raue umhüllende Oberfläche einen Mittenrauwert $R_a$ im Bereich von 5 - 10 $\mu$m und/oder eine Rautiefe $R_z$ im Bereich von 40 - 80 $\mu$m aufweist.

Und auch vorteilhaft ist es, wenn das Schaummaterial und/oder die Schicht aus SiC, $Al_2O_3$, Cordierit, Edelstahl, Chromstahl, Baustahl, Titan, Tantal und/oder Kombinationen dieser Materialien bestehen.

Von Vorteil ist es auch, wenn das Verhältnis der mittleren Zellfensterdurchmesser zur mittleren Partikelgröße, die die raue Schicht bildet, 3 bis 500 beträgt.

Und auch von Vorteil ist es, wenn das Verhältnis von mittlerer Stegdicke zur Rautiefe $R_z$ der umhüllenden Oberfläche 1 bis 100 beträgt.

Ebenso ist es von Vorteil, wenn das Verhältnis von mittlerer Stegdicke zu mittlerer Partikelgröße, die die raue Schicht bildet, 1 bis 100 beträgt.

Bei dem erfindungsgemäßen Verfahren zur Herstellung von offenzelligen Keramik- und/oder Metallschäumen mit rauer umhüllender Oberfläche wird aus einem monomodalen Keramik- und/oder Metallpulver mit einer mittleren Partikelgröße $\leq 2$ $\mu$m oder aus einer bimodalen Pulvermischung aus Keramik- und/oder Metallpulvern eine Suspension hergestellt, wobei im Falle der bimodalen Pulvermischung das grobe Pulver eine mittlere Partikelgröße von 5 - 100 $\mu$m und das feine Pulver eine mittlere Partikelgröße von $\leq 2$ $\mu$m aufweist und die beiden Pulver im Volumenverhältnis von feinem zu grobem Pulver von 20 : 80 bis 80 : 20 gemischt werden, nachfolgend ein offenzelliger Polymerschaum mit der Suspension ein oder mehrmals beschichtet wird, die überschüssige Suspension entfernt, der beschichtete Polymerschaum getrocknet und dann vor oder nach Entfernung des Polymerschaummaterials und/oder vor oder nach Sinterung des Grünkörpers bei Temperaturen $\geq 1000$ °C der Grünkörper mit oder ohne Polymerschaum oder der Sinterkörper ein- oder mehrmals mit einer Suspension aus einem monomodalen Keramik- und/oder Metallpulver mit einer mittleren Partikelgröße von 5 - 100 $\mu$m beschichtet, getrocknet und bei Temperaturen von > 1000 °C gesintert wird, wobei weitere funktionelle Beschichtungen auf den beschichteten Grün- und/oder Sinterkörper aufgebracht werden können.

Vorteilhafterweise wird zur Herstellung einer Suspension aus einem monomodalen Keramik- und/oder Metallpulver mit einer mittleren Partikelgröße von 5 - 100 $\mu$m ein Pulver mit einer engen, monomodalen Partikelgrößenverteilung eingesetzt.

Ebenfalls vorteilhafterweise wird eine bimodale Pulvermischung eingesetzt, bei der das grobe Pulver eine mittlere Partikelgröße von 10 - 80 $\mu$m und das feinere Pulver eine mittlere Partikelgröße von < 1$\mu$m aufweisen.

Weiterhin vorteilhafterweise wird eine bimodale Pulvermischung eingesetzt, bei der der Anteil von feinem zu grobem Pulver von 20: 80 bis 40 : 60 beträgt.

Vorteilhaft ist es auch, wenn als funktionelle Beschichtungen Washcoats und/oder Katalysatormaterialien und/oder Adsorbentien und/oder Materialien zur Modifizierung der Benetzbarkeit und/oder Flussmittel aufgebracht werden, wobei noch vorteilhafterweise als Washcoats Gamma-$Al_2O_3$, $CeO_2$, $TiO_2$, Mullit, Ca-Aluminate, als Katalysatoren Edelmetalle, wie Pt, Pd, Rh, Ir, Ru, Ubergangsmetalle, wie Fe, Ni, Mn, als Adsorbentien Aktivkohle, Zeolithe, Silica, als Materialien zur Modifizierung der Benetzbarkeit Polymere, wie Teflon, als Flussmittel Mittel zur Desoxidation von Metallschmelzen, wie Kryolith, eingesetzt werden.

Von Vorteil ist es ebenfalls, wenn der Grünkörper mit oder ohne Polymerschaum oder der Sinterkörper bei Temperaturen von 1100 bis 2200 °C gesintert wird.

Von Vorteil ist es ebenfalls, wenn ein offenzelliger Polymerschaum eingesetzt wird, bei dem die mittlere Zellgröße 8 bis 60 ppi (3,15 - 23,62 Poren/cm) beträgt. Auch von Vorteil ist es, wenn als funktionelle Beschichtungen Washcoats und/oder Katalysatormaterialien und/oder Adsorbentien und/oder Materialien zur Modifizierung der Benetzbarkeit und/oder Flussmittel zugegeben werden, wobei noch vorteilhafterweise als Washcoats Gamma-$Al_2O_3$, $CeO_2$, $TiO_2$, Mullit, Ca-Aluminate, als Katalysatoren Edelmetalle, wie Pt, Pd, Rh, Ir, Ru, Ubergangsmetalle, wie Fe, Ni, Mn, als Adsorbentien Aktivkohle, Zeolithe, Silica, als Materialien zur Modifizierung der Benetzbarkeit Polymere, wie Teflon, als Flussmittel Mittel zur Desoxidation von Metallschmelzen, wie Kryolith, eingesetzt werden.

Und auch von Vorteil ist es, wenn der Grünkörper bei Temperaturen von 1100 bis 2200 °C gesintert wird.

Mit der erfindungsgemäßen Lösung wird es erstmals möglich, offenzellige Keramik- und/oder Metallschäume mit einer bis zu 10fachen Erhöhung der Rauheit der umhüllenden Oberfläche herzustellen, die insbesondere verbesserte Haftfestigkeiten mit weiteren, insbesondere Funktionsschichten, zeigen.

Durch die erfindungsgemäße Lösung zeigt eine Schaumstruktur aus Keramik und/oder Metall bereits eine erfindungsgemäße raue umhüllende Oberfläche oder eine bereits bestehende Schaumstruktur aus Keramik und/oder Metall wird mit einer Beschichtung versehen, die dann die erfindungsgemäße raue umhüllende Oberfläche aufweist.

Erreicht wird dies dadurch, dass entweder die umhüllende Oberfläche der Schaumstruktur selbst oder die Beschichtung große Partikel aufweisen, die deutlich größer sind, als bei dem offenzelligen Keramik- und/oder Metall-Schaum nach dem Stand der Technik. Dabei darf die durchschnittliche Partikelgröße, die für die Schaumstruktur oder für die Beschichtung verwendet wird, prinzipiell nicht die Größe der Zellfenster in der Schaumstruktur überschreiten, sondern sollte mindestens 10 % geringer betragen, als die geringste Abmessung der Zellfenster. Würde die Partikelgröße größer gewählt, würden die Zellfenster verschlossen und damit die Offenzelligkeit des Schaumes beeinträchtigt oder die Partikel würden bei dem Beschichtungsvorgang nicht an die Stegoberflächen gelangen. Die Abstimmung der Partikelgröße auf die Zellfenstergröße ist mit der Auswahl eines Pulvers mit entsprechender Partikelgröße für den Fachmann leicht vorzunehmen. Die mittlere Zellgröße eine offenzelligen Schaumes wird mit der Einheit ppi (pores per inch) nach der amerikanischen ASTM-Norm D3576-77 ermittelt. Der Zelldurchmesser und die Zellfensterdurchmesser können aber auch genauer mit bildanalytischen Verfahren gemessen werden.

Die Herstellung von erfindungsgemäßen offenzelligen Schäumen mit rauer umhüllender Oberfläche ist für Zellgrößen von 8-60 ppi (3,15 - 23,62 Poren/cm) möglich. Es können auch Materialien mit gröberen Zellgrößen genutzt werden, nur sind die Ausgangsmaterialien dazu nicht kommerziell erhältlich. Alternativ zu Schäumen können daher auch grob strukturierte Netzwerke benutzt werden, wie sie z.B. in der DE 19753249 beschrieben sind.

Zur Erzielung eines erfindungsgemäßen Schaumes mit hoher Rauigkeit der umhüllenden Oberfläche reichen oft durchschnittliche Partikelgrößen aus, die nur etwa 10 bis 50 % der geringsten Abmessung der Zellfenster betragen. Je nach Zellgröße des eingesetzten Schaumes kommen dabei mittlere Partikelgrößen im Bereich von 5 bis 150 $\mu$m zum Einsatz. Die Schichtdicken der aufgebrachten Beschichtung betragen dabei 20 bis 500 $\mu$m.

Der besondere Vorteil der erfindungsgemäßen Lösung besteht darin, dass die Erhöhung der Oberflächen-Rauheit überraschend nicht zu einer signifikanten Veränderung der spezifischen Oberfläche führt, wie es bei anderen Beschichtungen nach dem Stand der Technik der Fall ist. Das ist besonders bedeutsam, da eine Erhöhung der spezifischen Oberfläche auch eine erhöhte Reaktivität bedeutet, die für viele Anwendungen nicht erwünscht ist. Die Werte für die spezifischen Oberflächen der erfindungsgemäßen offenzelligen Schäume verändern sich um maximal 10 % gegenüber den nach dem Stand der Technik bekannten und hinsichtlich ihrer Zellgröße vergleichbaren Schäumen, ist tatsächlich aber im Wesentlichen kaum nachweisbar.

Weiterhin soll im Rahmen dieser Erfindung unter den Begriffen monomodale und bimodale Partikelgrößenverteilung folgendes verstanden werden:

Bei einer monomodalen Partikelgrößenverteilung liegen die Größen der Pulverpartikel um einen charakteristischen Mittelwert (dso) in einer Verteilung vor, welche einer Normalverteilung oder logarithmischer Normalverteilung entspricht. Eine enge monomodale Partikelgrößenverteilung liegt dann vor, wenn das Verhältnis von $d_{90}$:$d_{10}$-Wert der Verteilungsfunktion $\geq$0,5 ist.

Bei einer bimodalen Partikelgrößenverteilung liegt eine Größenverteilung mit zwei Maxima vor. Diese ergibt sich zum Beispiel dann, wenn zwei monomodalen Pulver mit unterschiedlichen charakteristischen Mittelwerten gemischt werden.

Funktionsschichten können sowohl vor als auch nach der Sinterung der Schäume aufgebracht werden. Diese weisen eine bessere Haftfestigkeit auf der erfindungsgemäß raueren umhüllenden Oberfläche auf. Funktionsschichten können sein Washcoats, wie Gamma-$Al_2O_3$, $CeO_2$, $TiO_2$, Mullit, Ca-Aluminate; Katalysatoren wie Edelmetalle, beispielsweise Pt, Pd, Rh, Ir, Ru und Übergangsmetalle, wie Fe, Ni, Mn; Adsorbentien wie Aktivkohle, Zeolithe, Silica, oberflächenaktive Stoffe zur Modifizierung der Benetzbarkeit (hydrophil/hydrophob) wie Polymere, wie Teflon, Reaktionsstoffe, wie Flussmittel zur Desoxidation von Metallschmelzen wie Kryolith.

Nachfolgend wird die Erfindung an mehreren Ausführungsbeispielen näher erläutert.

Dabei zeigen

Fig. 1    die Prinzipdarstellung eines offenzelligen Schaumes

Fig. 2    die idealisierte Prinzipdarstellung einer Zelle eines offenzelligen Schaumes

Fig. 3    die Prinzipdarstellung von Stegen mit zugehöriger umhüllender Oberfläche

Fig. 4    die Prinzipdarstellung eines typischen Querschnitts eines Steges eines offenzelligen Schaumes nach dem Stand der Technik

Fig. 5    die Prinzipdarstellung des typischen Querschnitts eines Steges eines erfindungsgemäßen Schaumes, der vollständig aus dem erfindungsgemäßen rauen Material besteht

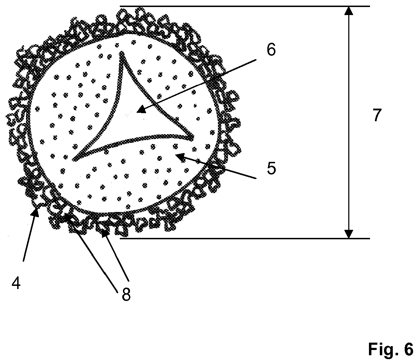

Fig. 6    die Prinzipdarstellung des typischen Querschnitts eines Steges eines erfindungsgemäßen Schaumes mit der erfindungsgemäßen rauen Oberfläche

Beispiel 1

Eine keramische Suspension auf Wasserbasis wird hergestellt. Dabei enthält die Suspension eine bimodale SiC-Pulvermischung mit grobem Pulver mit einer mittleren Partikelgröße von 18 µm und feinem Pulver mit einer mittleren Partikelgröße von 1,2 µm, die im Verhältnis 35 : 65 miteinander gemischt sind. Als Sinteradditive sind 0,6 Ma.-% Borcarbid und 9 Ma.-% einer wasserlöslichen Stärkelösung (entspricht 3 Ma.-% Kohlenstoff nach der Pyrolyse) zugegeben. Die Suspension hat einen Feststoffgehalt von 84 %.

Ein Polyurethan-Schaumstoff mit den Abmessungen 110 x 80 x 20 mm$^3$ und mit einer Zellgröße von 10 ppi (3,94 Poren/cm) wird dann mit der Suspension getränkt und die überschüssige Suspension mit einer Zentrifuge abgetrennt. Um den Schaumstoff vollständig zu beschichten, ist ein Beschichtungsgewicht von 89 g erforderlich. Danach erfolgt die Trocknung bei Temperaturen von 120 °C innerhalb von 60 min. Anschließend wird der Grünkörper durch Temperaturerhöhung auf 1200 °C unter Argonatmosphäre pyrolysiert. Nach der Abkühlung erfolgt die Tränkung des pyrolysierten Materials in einer weiteren Suspension, die aus 68,5 Ma.-% eines SiC-Pulvers mit einer engen, monomodalen Partikelgrößenverteilung und mit einer mittleren Partikelgröße von 18 µm, 19,0 Ma.-% Stärkelösung, 12,5 Ma.-% Polyvinylalkohol und 16,5 Ma.-% entionisiertem Wasser besteht. Danach wird die überschüssige Suspension durch Zentrifugieren bei 800 U/min abgetrennt. Nunmehr beträgt das Beschichtungsgewicht 161 g.

Wiederum erfolgt eine Trocknung bei 100°C innerhalb von 60 min und die nachfolgende Sinterung in Argonatmosphäre bei 2100 °C innerhalb von 1h. Die Sintermasse des fertigen Keramikschaumes beträgt 137 g.

Der Mittenrauwert $R_a$ an der umhüllenden Oberfläche der Schaumkeramik, beträgt 3,5 µm und die Rautiefe $R_z$ 20 µm. Die spezifische Oberfläche wird mit 8400 m$^2$/m$^3$ gemessen.

Vergleichsbeispiel 2

Der pyrolysierte Schaum aus Beispiel 1 wird ohne die Aufbringung einer weiteren Suspension in Argonatmosphäre bei 2100 °C innerhalb von 1h gesintert. Die Rauheit der umhüllenden Oberfläche des gesinterten Schaumes beträgt gem. Mittenrauwert $R_a$ 1,3 µm, Rautiefe $R_z$ 10,1 µm. Die spezifische Oberfläche beträgt 8230 m$^2$/m$^3$.

Beispiel 3

Eine keramische Suspension auf Wasserbasis wird hergestellt. Dabei enthält die Suspension ein Aluminiumoxidpulver mit einer breiten, monomodalen Partikelgrößenverteilung mit einer mittleren Partikelgröße von 1,8 µm. Die Suspension hat einen Feststoffgehalt von 85 %.

Ein Polyurethan-Schaumstoff mit den Abmessungen Ø 100 x 150 mm und mit einer Zellgröße von 20 ppi (7,88 Poren/cm) wird dann mit der Suspension getränkt und die überschüssige Suspension mit einer Zentrifuge abgetrennt. Um den Schaumstoff vollständig zu beschichten, ist ein Beschichtungsgewicht von 250 g erforderlich. Danach erfolgt die Trocknung bei Temperaturen von 150°C innerhalb von 120 min.

Anschließend wird der Grünkörper auf eine Temperatur von 1600 °C erwärmt unter Luft ausgebrannt und gesintert. Die Sintermasse des fertigen Keramikschaumes beträgt 190 g. Der Mittenrauwert $R_a$ der umhüllenden Oberfläche wird mit 0,6 µm und die Rautiefe $R_z$ mit 4,5 µm gemessen. Die spezifische Oberfläche nach BET beträgt 7220 m$^2$/m$^3$.

Nach der Abkühlung erfolgt die Tränkung des gesinterten Materials in einer weiteren Suspension, die aus 75 Ma.-% Stahlpulver 1.4841 (AISI 314) mit einer monomodalen Partikelgrößenverteilung und einer mittleren Partikelgröße von 30 µm und 5,0 Ma.-% Saccharidbinder und 20 Ma.-% Wasser besteht. Danach wird die überschüssige Suspension durch Zentrifugieren bei 500 U/min abgetrennt. Nunmehr beträgt das Beschichtungsgewicht 300 g.

Wiederum erfolgt eine Trocknung bei 100 °C innerhalb von 120 min und die nachfolgende Sinterung im Vakuum bei 1200 °C innerhalb von 1h.

Der Mittenrauwert $R_a$ der umhüllenden Oberfläche beträgt 7 µm und die Rautiefe $R_z$ 28 µm. Die spezifische Oberfläche nach BET beträgt 7300 m$^2$/m$^3$.

Beispiel 4

Eine keramische Suspension auf Wasserbasis wird hergestellt. Dabei enthält die Suspension ein SiC-Pulver mit einer monomodalen, engen Partikelgrößenverteilung und mit einer mittleren Partikelgröße von 44 µm. Als Sinteradditiv ist 0,6 Ma.-% Borcarbid, außerdem 20,0 Ma.-% Stärkelösung und 10 Ma.-% Polyvinylalkohol zugegeben. Die Suspension hat einen Feststoffgehalt von 75 %.

Ein Polyurethan-Schaumstoff mit den Abmessungen 100x100x25 mm$^3$ und mit einer Zellgröße von 20 ppi (7,88 Poren/cm) wird dann mit der Suspension getränkt und die überschüssige Suspension über ein Quetsch-Walzensystem abgetrennt. Um den Schaumstoff vollständig zu beschichten, ist ein Beschichtungsgewicht von 80 g erforderlich. Danach erfolgt die Trocknung bei Temperaturen von 120 °C innerhalb von 30 min. Anschließend wird der Grünkörper durch Temperaturerhöhung auf 1200 °C unter Argonatmosphäre pyrolysiert und nachfolgend in Argonatmosphäre bei 2100 °C, 1h gesintert. Die Sintermasse des fertigen Keramikschaumes beträgt 65 g.

Der Mittenrauwert $R_a$ der umhüllenden Oberfläche der Schaumkeramik beträgt 7,5 $\mu$m und die Rautiefe $R_z$ 43 $\mu$m.

Bezugszeichenl iste

1    Schaumsteg
2    Schaumzelle
3    Verbindungspunkt verschiedener Schaumstege
4    umhüllende Oberfläche
5    versinterter Metall- oder Keramikwerkstoff mit Poren
6    innerer Hohlraum des Steges (ehemals Polyurethan-Stützgerüst für die Beschichtung mit Keramik oder Metall)
7    mittlere Stegdicke
8    grobes Pulverpartikel
9    Zellfenster

**Patentansprüche**

1.    Offenzellige Keramik- und/oder Metallschäume mit rauer umhüllender Oberfläche, bei denen die umhüllenden Oberflächen der Stege von Keramik- und/oder Metallschäumen aus einem Material bestehen und/oder mindestens teilweise mit einer Schicht bedeckt sind, welche(s) eine raue Oberfläche mit einem Mittenrauwert $R_a$ im Bereich von 3 - 15 $\mu$m und/oder eine Rautiefe $R_z$ im Bereich von 20 - 100 $\mu$m, gemessen nach DIN EN ISO 4287 (1998), aufweist.

2.    Keramik- und/oder Metallschäume nach Anspruch 1, bei denen die spezifische Oberfläche dieser Keramik- und/oder Metallschaum-Oberflächen um maximal 10 %, vorteilhafterweise um maximal 3 - 5 %, gegenüber bekannten Schaum-Oberflächen mit gleicher Zellgröße verändert ist.

3.    Keramik- und/oder Metallschäume nach Anspruch 1, bei denen die Schicht eine Dicke von 20 bis 500 $\mu$m aufweist.

4.    Keramik- und/oder Metallschäume nach Anspruch 1, bei denen die raue Oberfläche der Schäume und/oder der Schicht porös ist, wobei auch vorteilhafterweise die raue Oberfläche der Schäume und/oder der Schicht einen Porenanteil von 60 - 85 % aufweist.

5.    Keramik- und/oder Metallschäume nach Anspruch 1, bei denen die raue umhüllende Oberfläche einen Mittenrauwert $R_a$ im Bereich von 5 - 10 $\mu$m und/oder eine Rautiefe $R_z$ im Bereich von 40 - 80 $\mu$m aufweist.

6.    Keramik- und/oder Metallschäume nach Anspruch 1, bei denen das Schaummaterial und/oder die Schicht aus SiC, $Al_2O_3$, Cordierit, Edelstahl, Chromstahl, Baustahl, Titan, Tantal und/oder Kombinationen dieser Materialien bestehen.

7.    Keramik- und/oder Metallschäume nach Anspruch 1, bei denen das Verhältnis der mittleren Zellfensterdurchmesser zur mittleren Partikelgröße, die die raue Schicht bildet, 3 bis 500 beträgt.

8.    Keramik- und/oder Metallschäume nach Anspruch 1, bei denen das Verhältnis von mittlerer Stegdicke zur Rautiefe $R_z$ der umhüllenden Oberfläche 1 bis 100 beträgt oder bei denen das Verhältnis von mittlerer Stegdicke zu mittlerer Partikelgröße, die die raue Schicht bildet, 1 bis 100 beträgt.

9.    Verfahren zur Herstellung von offenzelligen Keramik- und/oder Metallschäumen mit rauer umhüllender Oberfläche nach mindestens einem der Ansprüche 1 bis 8, bei dem aus einem monomodalen Keramik- und/oder Metallpulver mit einer mittleren Partikelgröße ≤ 2 μm oder aus einer bimodalen Pulvermischung aus Keramik- und/oder Metallpulvern eine Suspension hergestellt wird, wobei im Falle der bimodalen Pulvermischung das grobe Pulver eine mittlere Partikelgröße von 5 - 100 μm und das feine Pulver eine mittlere Partikelgröße von ≤ 2 μm aufweist und die beiden Pulver im Volumenverhältnis von feinem zu grobem Pulver von 20 : 80 bis 80 : 20 gemischt werden, nachfolgend ein offenzelliger Polymerschaum mit der Suspension ein oder mehrmals beschichtet wird, die überschüssige Suspension entfernt, der beschichtete Polymerschaum getrocknet und dann vor oder nach Entfernung des Polymerschaummaterials und/oder vor oder nach Sinterung des Grünkörpers bei Temperaturen ≥ 1000 °C der Grünkörper mit oder ohne Polymerschaum oder der Sinterkörper ein- oder mehrmals mit einer Suspension aus einem monomodalen Keramik- und/oder Metallpulver mit einer mittleren Partikelgröße von 5 - 100 μm beschichtet, ge-trocknet und bei Temperaturen von > 1000 °C gesintert wird, wobei weitere funktionelle Beschichtungen auf den beschichteten Grün- und/oder Sinterkörper aufgebracht werden können.

**10.** Verfahren nach Anspruch 9, bei dem zur Herstellung einer Suspension aus einem monomodalen Keramik- und/oder Metallpulver mit einer mittleren Partikelgröße von 5 - 100 μm ein Pulver mit einer engen, monomodalen Partikelgrößenverteilung eingesetzt wird.

**11.** Verfahren nach Anspruch 9, bei dem eine bimodale Pulvermischung eingesetzt wird, bei der das grobe Pulver eine mittlere Partikelgröße von 10 - 80 μm und das feinere Pulver eine mittlere Partikelgröße von < 1μm aufweisen.

**12.** Verfahren nach Anspruch 9, bei dem eine bimodale Pulvermischung eingesetzt wird, bei der der Anteil von feinem zu grobem Pulver von 20: 80 bis 40 : 60 beträgt.

**13.** Verfahren nach Anspruch 9, bei dem der Grünkörper mit oder ohne Polymerschaum oder der Sinterkörper bei Temperaturen von 1100 bis 2200 °C gesintert wird.

**14.** Verfahren nach Anspruch 9, bei dem ein offenzelliger Polymerschaum eingesetzt wird, bei dem die mittlere Zellgröße 3,15 - 23,62 Poren/cm (8 bis 60 ppi) beträgt.

**15.** Verfahren nach Anspruch 9, bei dem als funktionelle Beschichtungen Washcoats, wie Gamma-$Al_2O_3$, $CeO_2$, $TiO_2$, Mullit, Ca-Aluminate, und/oder Katalysatormaterialien, wie Edelmetalle, wie Pt, Pd, Rh, Ir, Ru, Ubergangsmetalle, wie Fe, Ni, Mn, und/oder Adsorbentien, wie Aktivkohle, Zeolithe, Silica, und/oder Materialien zur Modifizierung der Benetzbarkeit, wie Polymere, beispielsweise Teflon, und/oder Flussmittel, wie Mittel zur Desoxidation von Metallschmelzen, beispielsweise Kryolith, aufgebracht werden.

## Claims

1. Open-cell ceramic and/or metal foams having a rough enveloping surface, wherein the enveloping surfaces of the struts of ceramic and/or metal foams consist of a material and/or are at least partly covered with a layer which has a rough surface having an average roughness $R_a$ in the range of 3-15 μm and/or a peak to valley height $R_z$ in the range of 20-100 μm, measured in accordance with DIN EN ISO 4287 (1998).

2. Ceramic and/or metal foams according to Claim 1, wherein the specific surface area of the ceramic and/or metal foam surfaces differs by not more than 10%, advantageously by not more than 3-5%, from known foam surfaces having the same cell size.

3. Ceramic and/or metal foams according to Claim 1, wherein the layer has a thickness of from 20 to 500 μm.

4. Ceramic and/or metal foams according to Claim 1, wherein the rough surface of the foams and/or the layer is porous, with the rough surface of the foams and/or of the layer also advantageously having a porosity of 60-85%.

5. Ceramic and/or metal foams according to Claim 1, wherein the rough enveloping surface has an average roughness $R_a$ in the range of 5-10 μm and/or a peak to valley height $R_z$ in the range of 40-80 μm.

6. Ceramic and/or metal foams according to Claim 1, wherein the foam material and/or the layer consist(s) of SiC, $Al_2O_3$, cordierite, stainless steel, chromium steel, structural steel, titanium, tantalum and/or combinations of these materials.

7. Ceramic and/or metal foams according to Claim 1, wherein the ratio of the average cell window diameter to the average particle size which forms the rough layer is from 3 to 500.

8. Ceramic and/or metal foams according to Claim 1, wherein the ratio of average strut thickness to the peak to valley height $R_z$ of the enveloping surface is from 1 to 100 or the ratio of average strut thickness to average particle size which forms the rough layer is from 1 to 100.

9. Process for producing open-cell ceramic and/or metal foams having a rough enveloping surface according to at least one of Claims 1 to 8, wherein a suspension is produced from a monomodal ceramic and/or metal powder having an average particle size of $\leq 2$ $\mu$m or from a bimodal powder mixture of ceramic and/or metal powders, wherein the case of the bimodal powder mixture the coarse powder has an average particle size of 5-100 $\mu$m and the fine powder has an average particle size of $\leq 2$ $\mu$m and the two powders are mixed in a volume ratio of fine powder to coarse powder of from 20:80 to 80:20, an open-cell polymer foam is subsequently coated one or more times with the suspension, the excess suspension is removed, the coated polymer foam is dried and, before or after removal of the polymer foam material and/or before or after sintering of the green body at temperatures of $\geq 1000°$C, the green body with or without polymer foam or the sintered body is then coated one or more times with a suspension of a monomodal ceramic and/or metallic powder having an average particle size of 5-100 $\mu$m, dried and sintered at temperatures of > 1000°C, with further functional coatings being able to be applied to the coated green and/or sintered body.

10. Process according to Claim 9, wherein a powder having a narrow, monomodal particle size distribution is used for producing a suspension of a monomodal ceramic and/or metal powder having an average particle size of 5-100 $\mu$m.

11. Process according to Claim 9, wherein a bimodal powder mixture in which the coarse powder has an average particle size of 10-80 $\mu$m and the finer powder has an average particle size of < 1 $\mu$m is used.

12. Process according to Claim 9, wherein a bimodal powder mixture in which the ratio of fine powder to coarse powder is from 20:80 to 40:60 is used.

13. Process according to Claim 9, wherein the green body with or without polymer foam or the sintered body is sintered at temperatures of from 1100 to 2200°C.

14. Process according to Claim 9, wherein an open-cell polymer foam in which the average cell size is 3.15-23.62 pores/cm (from 8 to 60 ppi) is used.

15. Process according to Claim 9, wherein washcoats such as gamma-$Al_2O_3$, $CeO_2$, $TiO_2$, mullite, Ca aluminates and/or catalyst materials such as noble metals such as Pt, Pd, Rh, Ir, Ru, transition metals such as Fe, Ni, Mn and/or adsorbents, such as activated carbon, zeolites, silica and/or materials for modifying the wettability, e.g. polymers, for example Teflon, and/or fluxes such as agents for deoxidizing metal melts, for example cryolite, are applied as functional coatings.

## Revendications

1. Mousses céramiques et/ou métalliques à cellules ouvertes, à surface enveloppante rugueuse, dans lesquelles les surfaces enveloppantes des cloisons des mousses céramiques et/ou métalliques sont constituées d'un matériau et/ou couvertes au moins en partie avec une couche, qui présente(nt) une surface rugueuse ayant une rugosité moyenne $R_a$ dans la plage de 3 - 15 $\mu$m et/ou une profondeur de rugosité $R_z$ dans la plage de 20 - 100 $\mu$m, mesurées selon DIN EN ISO 4287 (1988).

2. Mousses céramiques et/ou métalliques selon la revendication 1, dans lesquelles la surface spécifique des ces surfaces de mousses céramiques et/ou métalliques est modifiée d'au maximum 10 %, de façon avantageuse d'au maximum 3 - 5 %, par rapport aux surfaces de mousses connues à même taille de cellule.

3. Mousses céramiques et/ou métalliques selon la revendication 1, dans lesquelles la couche présente une épaisseur de 20 à 500 $\mu$m.

4. Mousses céramiques et/ou métalliques selon la revendication 1, dans lesquelles la surface rugueuse des mousses et/ou de la couche est poreuse, la surface rugueuse des mousses et/ou de la couche présentant également de façon avantageuse une proportion de pores de 60 - 85 %.

5. Mousses céramiques et/ou métalliques selon la revendication 1, dans lesquelles la surface enveloppante rugueuse présente une rugosité moyenne $R_a$ dans la plage de 5 - 10 $\mu$m et/ou une profondeur de rugosité $R_z$ dans la plage de 40 - 80 $\mu$m.

6. Mousses céramiques et/ou métalliques selon la revendication 1, dans lesquelles le matériau de mousse et/ou la couche consistent en SiC, $Al_2O_3$, cordiérite, acier inoxydable, acier chromé, acier de construction, titane, tantale et/ou des associations de ces matériaux.

7. Mousses céramiques et/ou métalliques selon la revendication 1, dans lesquelles le rapport du diamètre moyen de fenêtre de cellule à la taille moyenne de particule qui constitue la couche rugueuse vaut de 3 à 500.

8. Mousses céramiques et/ou métalliques selon la revendication 1, dans lesquelles le rapport de l'épaisseur moyenne de cloison à la profondeur de rugosité $R_z$ de la surface enveloppante vaut de 1 à 100 ou dans lesquelles le rapport de l'épaisseur moyenne de cloison à la taille moyenne de particule qui constitue la couche rugueuse vaut de 1 à 100.

9. Procédé pour la production de mousses céramiques et/ou métalliques à cellules ouvertes, à surface enveloppante rugueuse, selon au moins l'une quelconque des revendications 1 à 8, dans lequel on prépare une suspension à partir d'une poudre monomodale de céramique et/ou de métal, ayant une taille moyenne de particule $\leq 2$ $\mu$m ou à partir d'un mélange bimodal de poudres à base de poudres de céramique et/ou de métal, dans le cas du mélange bimodal de poudres la poudre grossière présentant une taille moyenne de particule de 5 - 100 $\mu$m et la poudre fine présentant une taille moyenne de particule de $\leq 2$ $\mu$m et les deux poudres étant mélangées en un rapport en volume de la poudre fine à la poudre grossière de 20 : 80 à 80 : 20, ensuite on enduit une ou plusieurs fois la mousse de polymère à cellules ouvertes avec la suspension, on élimine la suspension en excès, on sèche la mousse de polymère enduite et ensuite, avant ou après élimination du matériau de mousse de polymère et/ou avant ou après frittage du corps cru à des températures $\geq 1$ 000 °C, le corps cru avec ou sans mousse de polymère ou le corps fritté est revêtu une ou plusieurs fois avec une suspension d'une poudre monomodale de céramique et/ou de métal ayant une taille moyenne de particule de 5 - 100 $\mu$m, séché et fritté à des températures de > 1 000 °C, d'autres revêtements fonctionnels pouvant être appliqués sur le corps cru et/ou le corps fritté revêtu(s).

10. Procédé selon la revendication 9, dans lequel dans la préparation d'une suspension à partir d'une poudre monomodale de céramique et/ou de métal, ayant une taille moyenne de particule de 5 - 100 $\mu$m on utilise une poudre ayant une distribution monomodale étroite de tailles de particules.

11. Procédé selon la revendication 9, dans lequel on utilise un mélange bimodal de poudres, dans lequel la poudre grossière présente une taille moyenne de particule de 10 - 80 $\mu$m et la poudre plus fine présente une taille moyenne de particule de < 1 $\mu$m.

12. Procédé selon la revendication 9, dans lequel on utilise un mélange bimodal de poudres dans lequel le rapport de la poudre fine à la poudre grossière vaut de 20 : 80 à 40 : 60.

13. Procédé selon la revendication 9, dans lequel le corps cru avec ou sans mousse de polymère ou le corps fritté est fritté à des températures de 1 100 à 2 200 °C.

14. Procédé selon la revendication 9, dans lequel on utilise une mousse de polymère à cellules ouvertes dans laquelle la taille moyenne de cellule vaut 3,15 - 23,62 pores/cm (8 à 60 pores/pouce).

15. Procédé selon la revendication 9, dans lequel on applique en tant que revêtements fonctionnels des washcoats, tels que gamma-$Al_2O_3$, $CeO_2$, $TiO_2$, la mullite, les aluminates de Ca, et/ou des matières catalytiques, telles que des métaux précieux, tels que Pt, Pd, Rh, Ir, Ru, des métaux de transition, tels que Fe, Ni, Mn, et/ou des adsorbants, tels que le charbon actif, les zéolithes, la silice, et/ou des matières destinées à la modification de la mouillabilité, telles que des polymères, le Téflon par exemple, et/ou des flux, tels que des agents destinés à la désoxydation de métaux en fusion, la cryolithe par exemple.

EP 2 373 594 B1

**Fig. 1**

**Fig. 2**

**Fig. 3**

11

**Fig. 4**

**Fig. 5**

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3090094 B1
- US 6635339 B1
- US 6887809 B
- DE 3540449 A1
- DE 19753249

**In der Beschreibung aufgeführte Nicht-Patentliteratur**

- Brevier Technische Keramik. Verlag Hans Carl, 2006